# EUROPÄISCHE PATENTSCHRIFT

(11) **EP 1 815 931 B1**
(45) Veröffentlichungstag und Bekanntmachung des Hinweises auf die Patenterteilung: **02.06.2010**
(21) Anmeldenummer: 07002070.6
(22) Anmeldetag: 31.01.2007
(51) Int. Cl.: B23D 45/10, B27G 19/10, B23D 59/00

(54) **Vorritzsägeblätter und ihr Einstellverfahren**
Scoring saw blades and their adjustment method
Scies à inciser et procédé pour leur ajustement

(30) Priorität: 02.02.2006 DE 102006005253
(43) Veröffentlichungstag der Anmeldung: 08.08.2007
(73) Patentinhaber: Otto Martin Maschinenbau GmbH & Co. KG, 87724 Ottobeuren (DE)
(72) Erfinder: Martin, Peter, 87700 Memmingen (DE)
(74) Vertreter: Pfister, Stefan Helmut Ulrich

(56) Entgegenhaltungen:
- EP-A- 1 074 326
- EP-A- 1 440 776
- EP-A2- 1 066 906
- DE-A1- 19 520 108
- DE-U1- 20 005 348
- US-A- 4 536 111
- US-A1- 2004 149 116
- US-B1- 6 319 323

## Beschreibung

Die Erfindung betrifft ein Verfahren zur Einstellung der Lage und/oder Breite der Ritznute eines mehrere axial beabstandete Vorritzsägeblätter umfassenden Vorritzaggregates einer Kreissäge, und eine Kreissäge mit einem Hauptsägeblatt und einem mehrere, axial beastandete Vorritzsägeblätter umfassenden Vorritzaggregat. Dokument US2004/0149116A1 offenbart ein Kreissägeblatt und zwei zusammen gespannte Messerblätter, deren Abstand durch ein Zwischenstück festlegbar ist. Dieses Zwischenstück ist auswechselbar oder einstellbar, d.h. eine Demontage für die Verstellung des axialen Abstandes der beiden Vorritzsägeblätern ist nicht notwendig. Hierbei ist es jedoch nachteilig, dass mehrere manuelle Einstellschritte notwendig sind, um die richtige Einstellung der Messerblätter zu erzielen.

Aus dem Stand der Technik ist es bekannt, daß Kreissägen mit stehendem oder verfahrendem Sägeblatt ein auf einem Tisch aufliegendes oder horizontal bewegtes Werkstück schneiden. Dabei ist ein Vorritzsägeaggregat vorgesehen, das eine Vorritznut in das Werkstück einbringt, bevor das Hauptsägeblatt das Werkstück an der vorgesehene Stelle trennt. Dabei sind Maschinen mit Vorritzsägeaggregaten bekannt, die ein oder zwei Vorritz-Sägeblätter aufweisen. Das Vorritzsägeaggregat dient dazu, eine auf dem Maschinentisch aufliegende zu sägende Platte vor dem durchtrennenden Schnitt auf derjenigen Seite einzuritzen, auf der beim durchtrennenden Schnitt das Hauptsägeblatt austritt. Die dabei entstehende Ritznute ist geringfügig breiter als die Schnittfuge, die beim durchtrennenden Schnitt entsteht und meist zwischen 0,5 und 2 mm tief. Durch diesen Ritzschnitt wird ein Ausreißen, insbesondere beschichteter Platten, beim durchtrennenden Sägeschnitt auf der Seite des austretenden Hauptsägeblattes vermieden.

Sehr wichtig ist dabei die präzise Einstellung des Vorritzsägeblattes bzw. der Vorritzsägeblätter auf das jeweilige Hauptsägeblatt. Um den zuvor beschriebenen Effekt zu erreichen, muß die Ritznute geringfügig breiter sein als die Schnittfuge. Ein zu großer Überstand würde jedoch beim späteren Bekleben der Schnittfläche mit einem Kantenmaterial zu einer sehr unschönen und sichtbaren Fuge führen. Dies ist selbstverständlich nicht gewünscht. Aus diesem Grund könnten Nacharbeiten die Folge einer solchen unpräzisen Ritznute sein. Gegebenenfalls müßte man dann mit dem Abfräsen der Schnittflächen einen weiteren zeitaufwändigen und damit ungünstigen separaten Arbeitsgang nach dem Sägen durchführen.

Aus dem Stand der Technik sind zwei Arten von Vorritzsägeaggregaten bekannt. Dabei besteht eine Ausführung aus zwei voneinander definiert axial beabstandeten Vorritz-Sägeblättern gleichen Durchmessers. Die Breite der entstehenden Ritznute wird durch den Abstand der beiden Vorritz-Sägeblätter bestimmt.

Des Weiteren sind kegelförmig zulaufende Vorritzblätter bekannt, bei dem lediglich ein Sägeblatt verwendet werden muß. Dabei läuft der Zahn dieses Vorritzsägeblattes mit steigendem Durchmesser spitz zu, d. h. mit steigendem Durchmesser verringert sich die Breite des vorritzenden Zahnes. Die Breite der entstehenden Ritznute wird bestimmt durch die Eindringtiefe in die zu sägende Platte. Dazu muß dann die Höhenlage der Lagerung eines solchen Sägeblattes verändert werden.

Aus der Druckschrift US 2004/0149116 A1 sowie aus der zur Patentfamilie gehörenden Druckschrift EP 1 440 776 A1 ist eine Lösung bekannt, bei der ein sogenannter Nutzen aus Papierstapeln mittels zweier Vorritzsägeblätter vorgeritzt werden kann. Allerdings muss der Abstand der Vorritzsägeblätter jeweils, bezogen auf das Hauptsägeblatt, dann verändert werden, wenn ein geändertes Vorritzsägeblatt oder geändertes Material verwendet wird. Diese Einstellung erfolgt durch Demontage des Vorritzsägeblattes und das Einfügen eines Zwischenstückes. Die Höhe und/oder Position in der Breite muss dann entsprechend des Hauptsägeblattes eingestellt werden.

Aus der Druckschrift US 4,536,111 ist eine numerisch kontrollierte beziehungsweise gesteuerte Fräseranordnung bekannt, in der ein Werkstück mit Hilfe von zwei zueinander positionierbaren Fräsern bearbeitet wird. Dabei ist klar, dass die in dieser Druckschrift vorgestellte Lösung eine Bearbeitung eines Werkstückes auf seiner dem Bearbeitungswerkzeug zugewandten Seite ermöglicht und zwar derart, dass diese Seite zapfenartig ausgefräst wird. Während das erste Fräswerkzeug auf einem Schlitten feststehend positioniert ist, ist das zweite Fräswerkzeug, welches auf der linken Seite der Fräseranordnung sich befindet, durch eine längenveränderliche Welle im Abstand zum rechten Fräswerkzeug veränderbar, wodurch der Abstand der beiden Fräswerkzeuge zueinander einstellbar ist. Aus dieser Lösung lässt sich kein Verfahren ableiten, wie man zwei von einander beabstandete vorritzsägeblätter aufgrund der Abmessungen des Hauptsägeblattes entsprechend positioniert, um eine exakte Vorritzschnittlinie zu erhalten, die einen sauberen Schnitt des Hauptsägeblattes ermöglicht.

Bezüglich der Einstellung von geteilten Vorritz-Sägeblättern sind derzeit drei Arten der Einstellung des Abstandes üblich. Zum einen ist es bekannt, sehr dünne Plättchen oder Folien zwischen die beiden Vorritzsägeblätter einzulegen. Dadurch kann der Abstand verbreitert werden. Durch Herausnehmen dieser Plättchen oder Folien kann der Abstand wieder verringert werden. Des Weiteren ist es bekannt, die Nutbreite durch eine im Werkzeug integrierte Mechanik einzustellen, die mittels eines Schlüssels oder aber auch schlüssellos, allerdings bei stillstehendem Vorritz-Sägeblatt direkt an diesem, betätigt wird. Es ist weiterhin bekannt, bei Vorritz-Sägeblättern eine Einstellung der Nutbreite nach dem Hohlwellenprinzip elektromechanisch durchzuführen.

Obwohl insbesondere das elektromechanisch bewirkte Einstellen bzw. maschinell bewirkte Einstellen der Nutbreite nach dem Hohlwellenprinzip eine wesentliche Erleichterung der Einstellung der Vorritzsägeblätter mit sich bringt, bleibt es insbesondere bei sehr hohen Ansprüchen an die zu erreichende Schnittkantenqualität ein langwieriges und mühsames Unterfangen, da die Vorritzsägeblätter nicht nur in ihrer Breite auf das Hauptsägeblatt abgestimmt werden müssen sondern auch in ihrer Position bezüglich des Hauptsägeblattes und in ihrer Lage. Des Weiteren muß die gewünschte Höhenlage eingestellt werden. Dies ist, selbst wenn man alle Verstellvorgänge elektromechanisch durchführt, ein langwieriges und mühsames Unterfangen. Bei einem Werkzeugwechsel muß erneut eingestellt werden.

Aufgabe der Erfindung ist es daher, ein Einstellverfahren für Vorritzsägeblätter zur Verfügung zu stellen, das die Einstellung der Vorritzsägeblätter für eine optimale Ritznute erleichtert. Die Aufgabe der Erfindung wird durch die Merkmale der unabhängigen Ansprüche 1 und 12 gelöst. Weitere vorteilhafte Ausführungsformen sind den abhängigen Ansprüchen 2 bis 11, 13 und 14 zu entnehmen.

Die Erfindung geht von dem zuvor beschriebenen Stand der Technik aus und schlägt zur Lösung der gestellten Aufgabe ein Verfahren zur Einstellung der Lage und/oder Breite der Ritznute eines ein oder mehrere Vorritzsägeblätter umfassenden Vorritzaggregates einer Kreissäge vor, wobei die Steuerung der Kreissäge aufgrund mindestens eines Parameters des Hauptsägeblattes eine entsprechende Positionierung des Vorritzsägeblattes bzw. der Vorritzsägeblätter bewirkt. Durch diese jetzt zur Verfügung gestellte Vorgehensweise zur Einstellung der Lage und/oder Breite der Ritznute ist es gegeben, daß diese Einstelltätigkeit voll automatisch an einer Kreissäge entsprechend vorgenommen werden kann. Die Erfindung geht dabei davon aus, daß man bei der Positionierung des Vorritzaggregates bezüglich der Breite sich nach den Daten des Hauptsägeblattes richtet und beispielsweise von der Mittelachse dieses Hauptsägeblattes dann das Vorritzaggregat entsprechend positioniert. Dabei geht man geschickterweise so vor, daß man ein Vorritzsägeblatt des Vorritzaggregates so positioniert, daß auf einer Seite ein gewünschter seitlicher Überstand bereits eingestellt ist. Das zweite Vorritzsägeblatt einer Ausführungsform mit zwei Vorritzsägeblättern wird dann auf eine ermittelte bzw. berechnete Position gestellt, so daß auch dort der entsprechende Überstand gewährleistet ist.

Das Verfahren nach der Erfindung zeichnet sich auch dadurch aus, daß das Hauptsägeblatt ein Identifizierungsmittel mit einem Identifizierungscode trägt, der von der Steuerung, insbesondere, wenn das Hauptsägeblatt in der Kreissäge montiert ist, ausgelesen wird und aufgrund des Identifizierungscodes aus dem Datenspeicher die Parameter herausgelesen und für die Positionierungszwecke verwendet werden. Der Identifizierungscode ist dabei geschickterweise zum Beispiel als Barcode oder in einem Transponder abgelegt. Der entsprechend codierte Wert wird dann mit dem auf das Werkzeug bezogene, im Datenspeicher abgelegten Wert verglichen und so eine Zuordnung geschaffen. Damit können auch gleichzeitig die entsprechenden Werte für die Positionierung des oder der Vorritzsägeblätter berücksichtigt werden. Eine Weiterbildung des so beschriebenen Verfahrens zeichnet sich dadurch aus, daß für die Positionierung von mindestens einem Vorritzsägeblatt auch ein seitlicher Überstand der Ritznute gegenüber dem durchtrennenden Schnitt berücksichtigt wird. Dabei kann der Überstand beidseitig gleich oder beidseitig unterschiedlich sein.

In einer Weiterbildung der Erfindung ist es vorgesehen, daß der Überstand in die Steuerung eingegeben wird, so daß die Steuerung automatisch die Position und die Lage für das oder die Vorritzsägeblätter ermittelt und diese dann automatisch einstellt.

Ein Verfahren, wie zuvor beschrieben zeichnet sich in einer Weiterbildung dadurch aus, daß die Bestimmung der axialen Lage bzw. horizontalen Position des Vorritzsägeblattes anhand eines Referenzpunktes für das Hauptsägeblatt vorgenommen wird. Dabei handelt es sich um einen bekannten und allgemein gültigen Referenzpunkt für das Hauptsägeblatt. Dieser ist üblicherweise in Achsmitte auf der Flanschebene angeordnet. Allerdings ist dies nicht zwingend vorgeschrieben. Es ist der Steuerung lediglich mitzuteilen, wo dieser Referenzpunkt ist, damit die Steuerung anhand des dann gültigen Referenzpunktes die entsprechenden Werte ermittelt und zuordnet.

Das Verfahren zeichnet sich in einer weiteren Ausführungsform dadurch aus, daß zwei in axialer Richtung verstellbare Vorritzsägeblätter ausgehend von den Parametern des Hauptsägeblattes auf die ermittelten Positionen für die entsprechende Schnittbreite der Ritznute eingestellt werden. Dabei kann die Reihenfolge so vorgenommen werden, daß zunächst ein Vorritzsägeblatt auf die entsprechende Breite mit dem gewünschten Überstand eingestellt wird und hernach das andere Vorritzsägeblatt entsprechend positioniert wird. Dabei ist es klar, daß die Vorritzsägeblätter auch bezüglich ihrer Höhenlage entsprechend automatisch eingestellt werden können, um die entsprechende gewünschte Tiefe der Ritznute zu erhalten.

Natürlich umfaßt der Begriff axial und radial bezogen auf die Lage und Anordnung des Hauptsägeblattes im Sinne dieser Erfindung auch zu diesen Achsen bzw. Ebenen parallele Achsen.

Ein Verfahren, wie zuvor beschrieben, zeichnet sich entsprechend einer Weiterbildung dadurch aus, daß als Parameter des Hauptsägeblattes die Stammblattdicke und/oder die Schnittfugenbreite und/oder ein Asymmetriemaß vorgesehen ist. Bei einem symmetrischen Aufbau des Hauptsägeblattes kann man sowohl die Stammblattdicke als auch die Schnittfugenbreite als Parameter für die Einstellung der Vorritzsägeblätter verwenden, weil durch die Stammblattdicke und die Schnittfugenbreite (Zahnbreite) das Sägeblatt vollständig beschrieben ist, da dadurch die Schneidkanten entsprechend definiert sind. Durch ein asymmetrisch ausgebildetes Sägeblatt, welches nur optional hier beschrieben wird, können auch asymmetrisch ausgebildete Sägeblätter mit verwaltet werden. Dabei wäre das Asymmetriemaß = 0, wenn es sich um ein symmetrisches Sägeblatt handelt.

Das Verfahren zeichnet sich in einer Weiterbildung dadurch aus, daß die Steuerung die Parameter des Hauptsägeblattes auf einen Bezugspunkt bezieht unter Berücksichtigung des Überstandes die Lage und/oder Breite der Ritznute bestimmt und eine entsprechende Positionierung von zumindest einem der Vorritzsägeblätter bewirkt.

Selbstverständlich ist es in einer Ausführungsform der Erfindung auch vorgesehen, daß die Parameter des Hauptsägeblattes gegebenenfalls gemeinsam mit dem Überstand und gegebenenfalls mit einem Identifizierungscode in einen Datenspeicher der Steuerung ablegbar und wieder abrufbar sind. Damit erspart man sich aufwändige Justagearbeiten, wenn beispielsweise die Steuerung anhand des Identifizierungscodes erkennt, um welches Hauptsägeblatt es sich handelt und danach die entsprechenden Daten abruft und die Steuerung die Maße bzw. Werte für die Vorritzsägeblätter bzw. für ein Vorritzsägeblatt vorgibt.

Ein Verfahren, wie zuvor beschrieben, zeichnet sich entsprechend einer vorteilhaften Variante dadurch aus, daß die Steuerung auch Vorritzsägeblatt-Parameter berücksichtigt. Diese können ebenso wie beim Hauptsägeblatt in einem Parameterspeicher der Steuerung ablegbar und wieder abrufbar sein. Das Vorritzsägeblatt kann dazu auch Identifizierungsmittel aufweisen, anhand derer diese von der Steuerung erkannt und zugeordnet werden. Demnach ist es in einer Weiterbildung vorgesehen, daß das Vorritzaggregat zwei axial beabstandete Vorritzsägeblätter, bevorzugt mit gleichem Durchmesser aufweist und verwendet.

Das Verfahren zeichnet sich in einer Weiterbildung auch dadurch aus, daß die axiale Lage und der Abstand der Vorritzsägeblätter durch die Steuerung eingestellt wird. Dabei erfolgt diese Einstellung axial bezogen auf die Position bzw. auf den Wert des Hauptsägeblattes. Axial bezogen bedeutet in diesem Sinne, auf die Rotationsachse des Sägeblattes bezogen, die in der Regel horizontal orientiert ist.

Das erfindungsgemäße verfahren ist in einer Weiterbildung auch **dadurch gekennzeichnet, daß** als Vorritzsägeblatt-Parameter die Stammblattdicke, die Schnittfugenbreite und/oder der Durchmesser des Vorritzsägeblattes von der Steuerung verwaltet wird/werden.

In diesem Zusammenhang wird insbesondere darauf hingewiesen, daß alle im Bezug auf die Vorrichtung beschriebenen Merkmale und Eigenschaften aber auch Verfahrensweisen sinngemäß auch bezüglich der Formulierung des erfindungsgemäßen Verfahrens übertragbar und im Sinne der Erfindung einsetzbar und als mitoffenbart gelten. Gleiches gilt auch in umgekehrter Richtung, das bedeutet, nur im Bezug auf das Verfahren genannte, bauliche also vorrichtungsgemäße Merkmale können auch im Rahmen der Vorrichtungsansprüche berücksichtigt und beansprucht werden und zählen ebenfalls zur Erfindung und zur Offenbarung.

Zusammengefaßt wird durch die Erfindung auch ein Verfahren zur Einstellung der Schnittbreite der Ritznute für ein oder für mehrere Vorritzsägeblätter an Kreissägen zur Verfügung gestellt, bei dem die Schnittbreite der Ritznute von der Breite des Trennschnittes eines Hauptsägeblattes abhängig ist und das oder die Parameter des Hauptsägeblattes in einer Steuerung hinterlegt sind, wobei die Veränderung der Schnittbreite durch eine Verstellung des Vorritzsägeblattes in seiner axialen Lage und/oder horizontalen Position erfolgt, daß sich dadurch auszeichnet, daß die Steuerung zumindest ein Parameter des Hauptsägeblattes anhand vorgesehener Identifizierungsmittel abruft, aufgrund dieses Parameters und anhand eines vorzugebenden, vorgegebenen oder hinterlegten Wertes den oder die Überstände der Ritznute errechnet und aufgrund dieser ermittelten Werte das oder die Vorritzsägeblätter auf die entsprechende axiale Lage und/oder horizontale Position einstellt.

Die Erfindung stellt auch eine Kreissäge mit einem Hauptsägeblatt und einem mindestens ein Vorritzsägeblatt umfassenden Vorritzaggregat zur Verfügung, wobei die Kreissäge insbesondere zur Durchführung des Verfahrens nach einem oder mehreren der vorhergehenden Ausführungsformen und Varianten dient und die Kreissäge eine Steuerung aufweist und an dem Vorritzsägeblatt zumindest ein Stellantrieb für die Einstellung der Lage und/oder der Breite einer von dem Vorritzaggregat erzeugten Ritznute vorgesehen ist und die Steuerung den Stellantrieb in Abhängigkeit von mindestens einem Parameter des Hauptsägeblattes, welcher aufgrund eines Identifizierungscodes aus einem Datenspeicher abrufbar ist, positioniert.

In einer bevorzugten Variante wird eine Kreissäge, wie zuvor beschrieben, zur Verfügung gestellt, die sich dadurch auszeichnet, daß der Stellantrieb parallel zur Rotationsachse des Vorritzsägeblattes wirkt.

Erfindungsgemäß ist weiterhin vorgesehen, eine Kreissäge zur Verfügung zu stellen, bei der der Stellantrieb winklig, insbesondere rechtwinklig zur Rotationsachse des Vorritzsägeblattes wirkt.

In einer Ausführungsform wird weiterhin vorgeschlagen, daß ein erster Stellantrieb für die Lage und ein zweiter Stellantrieb für die Breite der von dem Vorritzaggregat erzeugten Ritznute vorgesehen ist.

Eine Weiterbildung der erfindungsgemäßen Kreissäge zeichnet sich dadurch aus, daß der erste und der zweite Stellantrieb parallel oder winklig, insbesondere rechtwinklig wirken.

Eine Weiterbildung der so beschriebenen Varianten der erfindungsgemäßen Kreissäge ist **dadurch gekennzeichnet, daß** die Drehrichtung des oder der Vorritzsägeblätter gegenläufig zur Drehrichtung des Hauptsägeblattes ausgebildet ist.

In diesem Zusammenhang wird insbesondere darauf hingewiesen, daß alle im Bezug auf die Kreissäge beschriebenen Merkmale und Eigenschaften aber auch Verfahrensweisen sinngemäß auch bezüglich der Formulierung des erfindungsgemäßen Verfahrens übertragbar und im Sinne der Erfindung einsetzbar und als mitoffenbart gelten. Gleiches gilt auch in umgekehrter Richtung, das bedeutet, nur im Bezug auf das Verfahren genannte, bauliche also vorrichtungsgemäße Merkmale können auch im Rahmen der

Die Erfindung wird nachfolgend anhand von Ausführungsbeispielen weiter beschrieben.

Es zeigen:
- Fig. 1:: Eine Seitenansicht mit Detaildar- stellung eines Vorritzaggregates und Hauptsägeblattes entsprechend einer Ausführungsform der Erfin- dung,
- Fig. 2:: Ansicht nach Fig. 1 von oben mit zwei Vorritzsägeblättern,
- Fig. 3a:: Hauptsägeblatt im Schnitt und
- Fig. 3b:: Vorritzsägeblätter in einer Aus- führungsform der Erfindung als Schnittdarstellung aus Sicht in Vorschubrichtung.

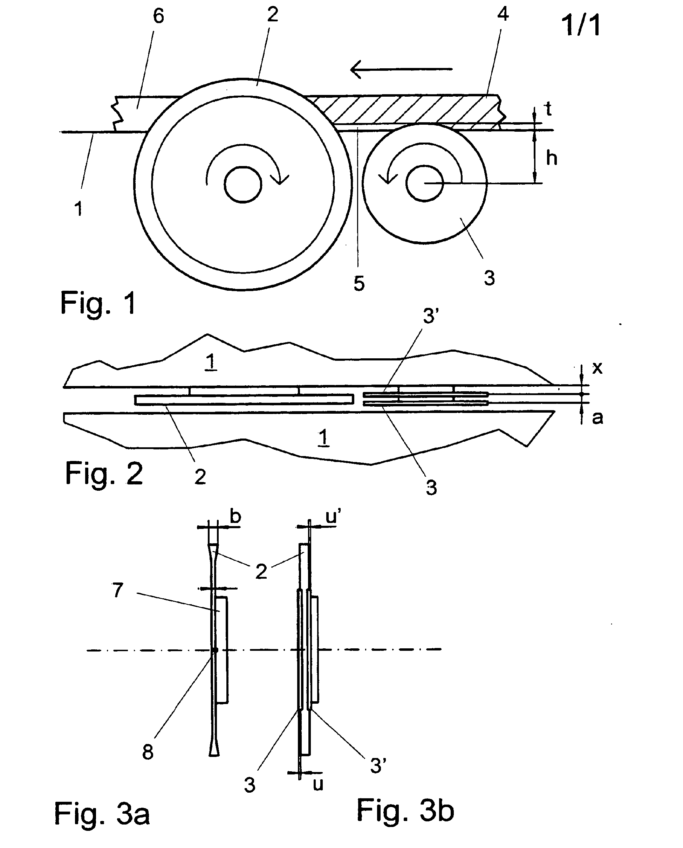

Die Fig. 1 zeigt eine Seitenansicht mit Detaildarstellung von Vorritzaggregat und Hauptsägeblatt 2 in einer schematischen Darstellung nach einer Ausführungsform der Erfindung. Die schematische Darstellung soll dabei zur Beschreibung wesentlicher Verfahrensabläufe des erfindungsgemäßen Verfahrens und von wesentlichen Teilen einer erfindungsgemäßen Kreissäge dienen.

Die Fig. 1 zeigt in der Seitenansicht das Hauptsägeblatt 2, welches in Uhrzeigerrichtung drehbar ausgebildet ist. Das Vorritzsägeblatt 3 ist mit einem Abstand vor dem Hauptsägeblatt 2 angeordnet und zwar derart, daß in dem zu bearbeitenden Werkstück 4 eine Ritznute 5 erzeugt wird, bevor das Hauptsägeblatt 2 den Hauptschnitt durchführt. Das Vorritzsägeblatt 3 ist dabei in seiner Höhe h veränderbar, um die Tiefe t der Ritznute 5 zu beeinflussen. Das Vorritzsägeblatt 3 ist auch in seiner axialen Lage verschieblich gelagert, um die Lage bezüglich des Hauptsägeblattes 2 verändern zu können und gleichzeitig eine Veränderung der Schnittbreite zu erreichen, wenn beispielsweise, wie aus Fig. 2 ersichtlich, zwei Vorritzsägeblätter 3, 3' vorgesehen sind. In der Seitenansicht ist das zweite Vorritzsägeblatt 3' nicht ersichtlich. Es wird diesbezüglich auf die Figuren 2 und 3 verwiesen. Das Werkstück 6 liegt auf einem Maschinentisch 1.

In einer nicht dargestellten, nicht von der Erfindung umfassten Ausführungsform kann das Vorritzsägeblatt 3 kegelförmig ausgebildet sein, wodurch eine Einstellung der Ritznute 5 in der Breite dann von der Positionierung des Vorritzsägeblattes 3 in der Höhe h abhängig ist. Eine axiale Verschieblichkeit muß dennoch gewährleistet sein, um bei unterschiedlichen Hauptsägeblättern 2 die Position beziehungsweise Lage bezüglich des verwendeten Sägeblattes ändern zu können. Dies ist insbesondere aufgrund unterschiedlichster Sägeblätter und/oder von unterschiedlichen Positionierungen der Sägewelle beziehungsweise des Flansches an der Sägewelle notwendig. Dadurch wird die gesamte Bearbeitung noch universeller und die Verwendungsvielfalt von einzusetzenden Sägeblättern wird nicht eingeschränkt.

Wie aus der Fig. 1 ersichtlich, ist die Drehrichtung des Vorritzsägeblattes 3 durch einen Pfeil in entgegengesetzter Richtung zur Drehrichtung des Hauptsägeblattes 2 vorgesehen. Das Verfahren zur Einstellung der Lage und/oder Breite der Ritznute 5 erfolgt so, daß aufgrund der Daten des Hauptsägeblattes 2 eine entsprechende Positionierung der Vorritzsägeblätter 3, 3' bewirkt wird. Dazu werden die Daten des Hauptsägeblattes 2 anhand einer Identifizierungsmöglichkeit, wie zum Beispiel eines Barcodes, eingelesen, die Lage des Hauptsägeblattes 2 anhand eines Referenzpunktes bestimmt und anschließend, aufgrund eines gewünschten Überstandes u, u', die vorritzsägeblätter 3 eingestellt.

In einer nicht zur Erfindung gehörenden Variante mit einem kegelförmig ausgebildeten Vorritzsägeblatt wird dabei die Lage des Vorritzsägeblattes bezüglich der Lage des Hauptsägeblattes 2 anhand des Referenzpunktes 8 bestimmt und anschließend die Höhe h aufgrund des vorgegebenen Wertes für die Überstände u, u' eingestellt. Anhand des Referenzpunktes 8 wird dabei beispielsweise die Mittelachse des Hauptsägeblattes 2 bestimmt und anschließend das Vorritzsägeblatt 3 in seiner Lage genau auf diese ausgerichtet. Im Falle der in den Figuren 1 bis 3 dargestellten zur Erfindung gehörenden Variante mit zwei Vorritzsägeblättern 3, 3' werden diese ebenfalls anhand dieser Mittelachse links und rechts jeweils entsprechend positioniert, wobei gleichzeitig der jeweilige Überstand u, u' berücksichtigt wird.

Das erfindungsgemäße Verfahren zeichnet sich dadurch aus, daß die für die Einstellung benötigten Werte zum einen in der Steuerung hinterlegt sind und zum anderen durch die Steuerung errechnet werden, wobei es entsprechend einer Ausführungsform der Erfindung dann vorgesehen ist, diese einmal ermittelten Werte für die Position der entsprechenden Vorritzsägeblätter 3, 3' auch in der Steuerung zu hinterlegen, so daß eine Einstellung dann automatisch, ohne eine erneute Berechnung erfolgen kann. Es ist demnach erfindungsgemäß vorgesehen, daß für die Positionierung des oder der Vorritzsägeblätter 3, 3' auch der seitliche Überstand der Ritznute 5 gegenüber dem durchtrennenden Schnitt berücksichtigt wird.

Die Fig. 2 zeigt die Ansicht von Fig. 1 von oben. Der Maschinentisch 1 ist in dieser Darstellung gebrochen dargestellt. Das Sägeblatt 2 befindet sich in Vorschubrichtung des Pfeiles hinter den Vorritzsägeblättern 3, 3'. Wie aus dieser schematischen Darstellung ersichtlich, ist mit einem Vorritzaggregat entsprechend der Erfindung eine vollständig automatisierte Einstellung der drei bestimmenden Achsen von Vorritzsägeblättern möglich, nämlich, die horizontale (axiale) Position x des Vorritzsägeblatt-Paares 3, 3', in der Darstellung gemäß Fig. 2 relativ zur Maschinentischkante, der horizontale (axiale) Abstand a des Vorritzsägeblatt-Paares 3, 3' und die vertikale Position h des Vorritzsägeblatt-Paares 3, 3' in der Darstellung beispielhaft relativ zur Tischfläche des Maschinentisches 1.

Die Fig. 3a zeigt ein Hauptsägeblatt 2 im Schnitt mit den geometrischen Parametern Stammblattdicke d und Schnittfugenbreite b. Das Bezugszeichen 7 bezeichnet den Flansch und mit 8 ist ein beispielhafter Referenzpunkt in der Achsmittel auf der Flanschebene gezeigt.

Die Fig. 3b zeigt die in Fig. 1 beschriebene Anordnung aus Sicht in Vorschubrichtung. Dabei sind die Vorritzsägeblätter 3, 3' entsprechend der Lage des Hauptsägeblattes 2 ausgerichtet. Die Vorritzsägeblätter 3 und 3' sind dabei derart angeordnet, daß die gewünschten Überstände u, u' auf beiden Seiten des durchtrennenden Schnittes definiert sind. Die vertikale Position der Vorritzsägeblätter 3, 3' bestimmt die Tiefe der Ritznute t.

In modernen Sägemaschinen sind die Parameter des verwendeten Hauptsägeblattes zentral in einer Maschinensteuerung gespeichert. Die Erfindung greift für die automatische Einstellung der Überstände zurück auf die gespeicherten Parameter Stammblattdicke d und Schnittfugenbreite b. Aus diesen Parametern und den einzugebenden, gewünschten Überständen u, u' errechnet die Erfindung die anzusteuernde horizontale (axiale) Position x des Vorritzsägeblatt-Paares und den horizontalen (axialen) Abstand a. Notwendig für dieses Verfahren ist weiterhin der bereits beschriebene und allgemein bekannte beziehungsweise gültige Referenzpunkt 8 für das Hauptsägeblatt. Dieser ist üblicherweise in Achsmitte auf der Flanschebene angeordnet.

Bevorzugt werden die oben genannten, gewünschten Überstände u, u' gemeinsam mit den Parametern des Hauptsägeblattes 2 zentral gespeichert, womit ein wiederholtes Eingeben überflüssig ist. Durch das bloße Bekanntmachen des verwendeten Hauptsägeblattes 2, zum Beispiel durch nicht dargestellte Identifizierungsmittel, ist damit vollautomatisch eine hochgenaue, reproduzierbare und sehr schnelle Einstellung der Überstände u, u' der Ritznute 5 möglich.

## Patentansprüche

1. Verfahren zur Einstellung der Lage und/oder Breite der Ritznute eines mehrere axial beabstandete Vorritzsägeblätter umfassenden Vorritzaggregates einer Kreissäge mit einer Steuerung, wobei die Parameter des Hauptsägeblattes in einem Datenspeicher der Steuerung ablegbar und wieder abrufbar sind und die Steuerung anhand eines Identifizierungscodes erkennt, um welches Hauptsägeblatt es sich handelt, und wobei aufgrund mindestens eines Parameters des Hauptsägeblattes eine entsprechende Positionierung der Vorritzsägeblätter bewirkt und die axiale Lage und der axiale Abstand der Vorritzsägeblätter zueinander eingestellt wird.

2. Verfahren nach Anspruch 1, **dadurch gekennzeichnet, dass** für die Positionierung von mindestens einem vorritzsägeblatt auch ein seitlicher Überstand der Ritznute gegen über dem durchtrennenden Schnitt berücksichtigt wird und/oder die Steuerung auch Vorritzsägeblatt-Parameter berücksichtigt.

3. Verfahren nach einem der vorhergehenden Ansprüche, **dadurch gekennzeichnet, dass** die Bestimmung der axialen Lage bzw. horizontalen Position des Vorritzsägeblattes anhand eines Referenzpunktes für das Hauptsägeblatt vorgenommen wird.

4. Verfahren nach einem der vorhergehenden Ansprüche, **dadurch gekennzeichet, dass** die Steuerung die Parameter des Hauptsägeblattes auf einen Bezugspunkt bezieht und unter Berücksichtigung des Überstandes die Lage der Ritznute bestimmt und eine entsprechende Positionierung von mindestens einem Vorritzsägeblatt bewirkt.

5. Verfahren nach einem der vorhergehenden Ansprüche, **dadurch gekennzeichnet, dass** zwei in axialer Richtung verstellbare Vorritzsägeblätter ausgehend von den Parametern des Hauptsägeblattes auf die ermittelnden Positionen für die entsprechende Schnittbreite der Ritznute eingestellt werden und die Steuerung anhand dieser Werte und der Parameter des Hauptsägeblattes insbesondere die horizontale und/oder vertikale bzw. bezüglich des Hauptsägeblattes die axiale und/oder radiale Position für das Vorritzsägeblatt ermittelt und einstellt.

6. Verfahren nach einem der vorhergehenden Ansprüche, **dadurch gekennzeichnet, dass** als Parameter des Hauptsägeblattes die Stammblattdicke und/oder die Schnittfugenbreite und/oder ein Asymmetriemaß vorgesehen ist.

7. Verfahren nach einem der vorhergehenden Ansprüche, **dadurch gekennzeichnet, dass** das Hauptsägeblatt ein Identifizierungsmittel mit dem Identifizierungscode trägt, der von der Steuerung, insbesondere, wenn das Hauptsägeblatt in der Kreissäge montiert ist, ausgelesen wird und aufgrund des Identifizierungscodes aus dem Datenspeicher die Parameter herausgelesen und für Positionierungszwecke verwendet werden.

8. Verfahren nach Anspruch 7, **dadurch gekennzeichnet, dass** die Parameter des Hauptsägeblattes gemeinsam mit dem Überstand und mit dem Identifizierungscode in einem Datenspeicher der Steuerung ablegbar und wieder aufrufbar sind.

9. verfahren nach einem der vorhergehenden Ansprüche, **dadurch gekennzeichnet, dass** der Überstand in die Steuerung eingegeben wird und/oder die Vorritzsägeblatt-Parameter in einem Parameterspeicher der Steuerung ablegbar und wieder aufrufbar sind.

10. Verfahren nach einem der vorhergehenden Ansprüche, **dadurch gekennzeichnet, dass** das Vorritzaggregat zwei axial beabstandete Vorritzsägeblätter, bevorzugt mit gleichem Durchmesser, aufweist und verwendet und, dass das Vorritzsägeblatt zumindest parallel zur Rotationsebene des Sägeblattes von der Steuerung positioniert wird.

11. verfahren nach einem der vorhergehenden Ansprüche, **dadurch gekenntzeichnet, dass** durch die Steuerung als Vorritzsägeblatt-Parameter die Stammblattdicke, die Schnittfugenbreite, der Durchmesser verwaltet wird/werden.

12. Kreissäge mit einem Hauptsägeblatt und einem mehrere, axial beabstandete Vorritzsägeblätter (3, 3') umfassenden Vorritzaggregat, wobei die Kreissäge insbesondere zur Durchführung des Verfahrens nach einem der vorhergehenden Ansprüche dient, und an dem Vorritzsägeblatt (3, 3') zumindest ein Stellantrieb für die Einstellung der Lage und der Breite einer von dem Vorritzaggregat erzeugten Ritznute (5) vorgesehen ist, wobei der Stellantrieb parallel zur Rotationsachse der Vorritzsägeblätter (3, 3') wirkt, um den axialen Abstand der Vorritzsägeblätter zueinander zu verstellen und die Kreissäge eine Steuerung aufweist, die zum Auslesen eines Identifizierungscodes eines identifizierungsmittels des Hauptsägeblattes und zum Positionieren des Stellantriebs in Abhängigkeit von mindestens einem Parameter des Hauptsägeblattes (2), welcher aufgrund des Identifizierungscodes aus dem Datenspeicher herausgelesen wird, ausgebildet ist.

13. Kreissäge nach dem vorhergehenden Anspruch 12, **dadurch gekennzeichnet, dass** der Stellantrieb winklig, insbesondere rechtwinklig zur Rotationsachse des Vorritzsägeblattes wirkt und/oder ein erster Stellantrieb für die Lage und ein zweiter Stellantrieb für die Breite der von dem Vorritzaggregat erzeugten Ritznute (5) vorgesehen ist.

14. Kreissäge nach Anspruch 13, **dadurch gekennzeichnet, dass** der erste und der zweite Stellantrieb parallel oder winklig, insbesondere rechtwinklig wirken und/oder die Drehrichtung des oder der Vorritzsägeblätter (3, 3') gegenläufig zur Drehrichtung des Hautsägeblattes (2) ausgebildet ist.

## Claims

1. Method for setting the position and/or the width of the scratch slot of a pre-scratch aggregate of a circular saw comprising several axially spaced pre-scratch saw blades with a control, wherein the parameters of the main saw blade can be filed in a data storage of the control and can be pulled again, and the control detects by means of an identification code which main saw blade is dealt with, and wherein, because of at least one parameter of the main saw blade a suitable positioning of the pre-scratch saw blades is effected, and the axial position and the axial distance of the pre-scratch saw blades to one another is set.

2. Method according to claim 1, **characterized in that** for positioning of at least one pre-scratch saw blade also a lateral projecting length of the scratch slot relatively to the separating cut is allowed for, and/or the control also allows for the parameters of the pre-scratch saw blade.

3. Method according to one of the preceding claims, **characterized in that** the determination of the axial position and the horizontal position, respectively, of the pre-scratch saw blade is done by means of a reference point for the main saw blade.

4. Method according to one of the preceding claims, **characterized in that** the control refers the parameters of the main saw blade to a reference point, and, while taking into account the projecting length, determines the position of the scratch slot, and effects a suitable positioning of at least one pre-scratch saw blade.

5. Method according to one of the preceding claims, **characterized in that** two in axial direction adjustable pre-scratch saw blades are set to the positions to be determined for the suitable saw cut of the scratch slot referring to the parameters of the main saw blade, and the control determines and sets in particular the horizontal and/or the vertical or, with respect to the main saw blade, the axial and/or radial position for the pre-scratch saw blade because of these values and of the parameters of the main saw blade.

6. Method according to one of the preceding claims, **characterized in that** as parameter of the main saw blade the primary blade thickness and/or the width of the cutting joint and/or an asymmetric measure is provided.

7. Method according to one of the preceding claims, **characterized in that** the main saw blade carries an identification means with the identification code which is read out by the control, in particular if the main saw blade is mounted in the circular saw, and, because of the identification code, the parameters are read out of the data storage and are used for positioning purposes.

8. Method according to claim 7, **characterized in that** the parameters of the main saw blade together with the projecting length and the identification code can be filed and called again in a data storage of the control.

9. Method according to one of the preceding claims, **characterized in that** the projecting length is put in the control, and/or the pre-scratch saw blade parameters can be filed and called again in a parameter storage of the control.

10. Method according to one of the preceding claims, **characterized in that** the pre-scratch aggregate has and uses two axially spaced pre-scratch saw blades, preferably of the same diameter, and that the pre-scratch saw blade is positioned by the control at least parallel to the rotational plane of the saw blade.

11. Method according to one of the preceding claims, **characterized in that** the control administrates as parameters of the pre-scratch saw blade the thickness of the primary blade, the width of the cutting joint, the diameter.

12. Circular saw with a main saw blade and a pre-scratch aggregate comprising several axially spaced pre-scratch saw blades (3, 3'), wherein the circular saw serves in particular for carrying out the method according to one of the preceding claims, and at the pre-scratch saw blade (3, 3') at least one actuating drive is provided for setting the position and width of a scratch slot (5) created by the pre-scratch aggregate, wherein the actuating drive acts parallel to the rotational axis of the pre-scratch saw blades (3, 3') in order to adjust the axial distance of the pre-scratch saw blades to each other, and the circular saw has a control which is designed for reading out an identification code of an identification means of the main saw blade and for positioning the actuating drive with reference to at least one parameter of the main saw blade (2) which is read out of the data storage because of the identification code.

13. Circular saw according to the preceding claim 12, **characterized in that** the actuating drive acts angularly, in particular rectangular, to the rotational axis of the pre-scratch saw blade, and/or a first actuating drive is provided for the position and a second actuating drive for the width of the scratch slot (5) created by the pre-scratch aggregate.

14. Circular saw according to claim 13, **characterized in that** the first and the second actuating drive act parallel or angularly, in particular rectangular, and/or the rotational direction of the pre-scratch saw blade(s) (3, 3') is opposite to the rotational direction of the main saw blade (2).

## Revendications

1. Procédé d'ajustement de la position et/ou de la largeur des rainures réalisées par un ensemble d'inciseurs à lames situées sur un même axe d'une scie circulaire et comportant un système de contrôle avec un dispositif de stockage de données permettant d'y stocker et de récupérer les données concernant la lame de scie principale de façon à ce que le système de contrôle identifie la lame principale à l'aide d'un code d'identification et positionne ainsi et à l'aide d'au moins un paramètre de cette lame principale l'ensemble d'inciseurs à lames et également la position des inciseurs et leur distance entre eux sur le même axe.

2. Procédé selon la revendication 1, **caractérisé en ce que** le positionnement d'au moins une lame inciseur prend en compte le dépassement latéral de la rainure par rapport à la coupe traversant le matériau et/ou **en ce que** le système de contrôle prend également en compte les paramètres des inciseurs.

3. Procédé selon une des revendications précédentes, **caractérisé en ce que** le positionnement axial ou horizontal des inciseurs est effectué à l'aide d'un point de référence de la lame de scie principale.

4. Procédé selon une des revendications précédentes, **caractérisé en ce que** le système de contrôle utilise les paramètres de la lame de scie principale par rapport à un point de référence et détermine la position de la rainure en prenant en compte le dépassement nécessaire puis effectue ensuite le positionnement d'au moins un des inciseurs.

5. Procédé selon une des revendications précédentes, **caractérisé en ce que** les positions de deux inciseurs sont ajustées en prenant en compte les paramètres de la lame de scie principale puis de la largeur déterminée entre les deux rainures d'incision de façon à ce que le système de contrôle détermine et ajuste en fonction des paramètres de la lame de scie principale la position en particulier horizontale et/ou verticale par rapport à la lame de scie principale, c'est-à-dire la position axiale et/ou radiale de l'inciseur.

6. Procédé selon une des revendications précédentes, **caractérisé en ce que** les paramètres de la lame de scie principale prévus sont l'épaisseur de la lame et/ou la largeur de la coupe et/ou un paramètre décrivant l'asymétrie du résultat.

7. Procédé selon une des revendications précédentes, **caractérisé en ce que** la lame de scie principale comporte des moyens d'identification avec un code d'identification lisible par le système de contrôle et en particulier lorsque la lame de scie principale est montée sur la scie circulaire, permettant au système de contrôle à l'aide de ce code d'identification de récupérer les paramètres du moyen de stockage des données afin d'effectuer ensuite le positionnement mécanique.

8. Procédé selon la revendication 7, **caractérisé en ce que** les paramètres de la lame de scie principale peuvent être stockés en parallèle avec la valeur du dépassement latéral et du code d'identification dans un moyen de stockage du système de contrôle d'où ils peuvent également être récupérer de la même manière.

9. Procédé selon une des revendications précédentes, **caractérisé en ce** le dépassement latéral est rentré au niveau du système de contrôle et/ou en ce que les paramètres concernant les inciseurs sont stockés dans une mémoire paramétrique du système de contrôle d'où ils peuvent être relus.

10. Procédé selon une des revendications précédentes, **caractérisé en ce que** l'ensemble d'inciseurs à lames comporte et utilise deux inciseurs latéralement séparés de préférence de même diamètre et **en ce que** la position de l'inciseur peut être modifiée parallèlement à l'axe de la lame de scie principale par le système de contrôle.

11. Procédé selon une des revendications précédentes, **caractérisé en ce que** le système de contrôle gère comme paramètres de l'inciseur l'épaisseur de la lame, la largeur de l'incision et le diamètre de lame de l'inciseur.

12. Scie circulaire comportant une lame de scie principale et un ensemble d'inciseurs à plusieurs lames (3, 3') latéralement distantes, la lame principale sert en particulier à suivre le procédé selon une des revendications précédentes et l'inciseur (3, 3') comporte au moins une commande destinée à l'ajustement de la position et de la largeur de la rainure d'incision (5) réalisée par l'ensemble d'inciseurs et agit parallèlement à l'axe de rotation de l'inciseur à lames (3, 3') afin de modifier la distance parallèle à l'axe de rotation des lames de l'inciseur, la scie circulaire comportant de plus un système de contrôle permettant de lire le code d'identification d'un moyen d'identification de la lame de scie principale et de piloter la commande d'ajustement en fonction d'au moins un paramètre de la lame de scie principale (2) lu à l'aide du code d'identification du moyen de stockage des données.

13. Scie circulaire selon la revendication précédente 12, **caractérisée en ce que** la commande d'ajustement agit sous un angle et de préférence sous un angle droit par rapport à l'axe de rotation de la lame inciseur et/ou **en ce qu'**il existe une première commande d'ajustement de la position et une deuxième commande d'ajustement de la largeur de la rainure d'incision (5) réalisé par l'ensemble d'inciseurs.

14. Scie circulaire selon la revendication 13, **caractérisée en ce que** la première et la deuxième commande agissent sous un angle et de préférence sous un angle droit et/ou en ce que le sens de rotation de ou des lame(s) (3, 3') est opposé au sens de rotation de la lame de scie principale (2).
